# FASCICULE DE BREVET EUROPEEN

(11) **EP 2 134 468 B1**
(45) Date de publication et mention de la délivrance du brevet: **04.11.2015**
(21) Numéro de dépôt: 08787767.6
(22) Date de dépôt: 05.03.2008
(51) Int. Cl.: B01J 23/40, B01J 23/44, B01J 35/00, B01J 37/03, B22F 9/24, C10G 45/40

(54) **PROCEDE DE SYNTHESE DE NANOPARTICULES METALLIQUES CUBIQUES EN PRESENCE DE DEUX REDUCTEURS**
VERFAHREN ZUR SYNTHESE KUBISCHER METALLNANOPARTIKEL IN GEGENWART ZWEIER REDUKTIONSMITTEL
METHOD FOR THE SYNTHESIS OF CUBIC METAL NANOPARTICLES IN THE PRESENCE OF TWO REDUCERS

(30) Priorité: 30.03.2007 FR 0702409
(43) Date de publication de la demande: 23.12.2009
(73) Titulaire: IFP Énergies nouvelles, 92852 Rueil-Malmaison Cedex (FR)
(72) Inventeur: BISSON, Laurent, F-69007 Lyon (FR); THOMAZEAU, Cécile, F-69530 Brignais (FR); SANCHEZ, Clément, F-91190 Gif-sur-Yvette (FR); BOISSIERE, Cédric, F-75013 Paris (FR)
(86) Numéro de dépôt international: PCT/FR2008/000294
(87) Numéro de publication internationale: WO 2008/132314

(56) Documents cités:
- WO-A-2007/057553
- FR-A- 2 874 515
- US-A- 6 090 858
- US-A1- 2005 056 118
- YOO, JUNG WHAN ET AL: "Propylene hydrogenation over cubic Pt nanoparticles deposited on alumina" BULLETIN OF THE KOREAN CHEMICAL SOCIETY , 25(6), 843-846 CODEN: BKCSDE; ISSN: 0253-2964, 2004, XP002457534
- TELKAR M M ET AL: "Shape-controlled preparation and catalytic activity of metal nanoparticles for hydrogenation of 2-butyne-1,4-diol and styrene oxide" APPLIED CATALYSIS A: GENERAL, ELSEVIER SCIENCE, AMSTERDAM, NL, vol. 273, no. 1-2, 8 octobre 2004 (2004-10-08), pages 11-19, XP004544427 ISSN: 0926-860X
- WANG, Z. L. ET AL: "Steps, ledges and kinks on the surfaces of platinum nanoparticles of different shapes" SURFACE SCIENCE , 380(2/3), 302-310 CODEN: SUSCAS; ISSN: 0039-6028, 1997, XP002457535
- FU, XIAOYI ET AL: "Shape-Selective Preparation and Properties of Oxalate-Stabilized Pt Colloid" LANGMUIR , 18(12), 4619-4624 CODEN: LANGD5; ISSN: 0743-7463, 2002, XP002457536
- SAU, T.K. ; MURPHY C.J.: "Room Temperature, High-Yield Synthesis of Multiple Shapes of Gold Nanoparticles in Aqueous Solution" J.AM. CHEM. SOC., vol. 126, 2004, pages 8648-8649, XP002499562 cité dans la demande
- FU, X. ET AL.: "Preparation of colloidal solutions of thin platinum nanowires" J. MATER. CHEM, vol. 13, 2003, pages 1192-1195, XP002499563 cité dans la demande

## Description

### Domaine de l'invention

La présente invention concerne un procédé de préparation de nanoparticules métalliques cubiques déposées sur un support. Lesdites nanoparticules supportées sont utilisables en tant que catalyseurs, en particulier pour la mise en oeuvre de procédés d'hydrogénation.

### Art antérieur

Les métaux, en particulier les métaux de transition, sont utilisés depuis de nombreuses années pour leur capacité à activer un certain nombre de molécules comme les hydrocarbures, l'hydrogène, l'oxygène ou encore le monoxyde de carbone. Les propriétés catalytiques des métaux vis-à-vis de ces molécules ont fait l'objet d'un nombre important de travaux qui ont permis de mettre en évidence leur versatilité en fonction du métal, des conditions de mise en oeuvre mais aussi de leurs caractéristiques physico-chimiques.

Les phénomènes d'activation par chimisorption, c'est-à-dire les phénomènes régis par l'adsorption des réactifs et les interactions chimiques entre lesdits réactifs et la particule métallique, dépendent des propriétés physico-chimiques des surfaces métalliques exposées. La taille de la particule métallique et la coordinence des atomes en surface de cette particule sont deux caractéristiques à prendre en compte pour obtenir des catalyseurs ayant des propriétés chimisorptives optimales, c'est-à-dire des catalyseurs ayant une aptitude à adsorber les réactifs, et à interagir chimiquement avec lesdits réactifs.

En ce qui concerne la taille de la particule métallique, celle-ci est généralement choisie en fonction de l'application visée.

Il est connu que les nanoparticules métalliques sont susceptibles d'adopter des formes stables différentes en fonction du nombre d'atomes qui les composent ou des interactions chimiques avec leur environnement, c'est-à-dire par exemple avec l'atmosphère réactionnelle. Les particules métalliques mises en oeuvre en catalyse hétérogène présentent des morphologies ayant un caractère isotrope marqué, adoptant des formes géométriques qui dépendent du nombre d'atomes constituant la particule. Parmi ces formes géométriques, on peut citer la forme icosaèdre, pour des petites particules de taille généralement inférieure à environ 10 Angstrom (1 Angstrom = 10⁻¹⁰m), et la forme cubooctaèdre tronqué pour des particules plus grandes.

Un objet de l'invention est de fournir une méthode de préparation de nanoparticules métalliques déposées sur un support permettant de contrôler la forme de ces nanoparticules, et notamment permettant de préparer des nanoparticules supportées présentant une morphologie cubique, c'est-à-dire présentant un facteur de forme F compris entre 0,78 et 0,81.

Un certain nombre de méthodes de synthèse de nanoparticules sont déjà bien connues de l'homme du métier.

Il est connu de l'homme du métier des méthodes de synthèse de nanoparticules de forme cubique en solution dans un milieu organique, par exemple dans de l'alcool ou dans du polyol, dans lesquelles la croissance des nanoparticules peut être contrôlée par adsorption d'agent sélectif en une seule étape. Une réduction est généralement réalisée à reflux, c'est à dire à la température d'ébullition du milieu organique, et la phase organique sert à la fois de solvant pour l'agent d'adsorption sélectif, généralement un polymère, et de réducteur pour le précurseur métallique. Ces méthodes sont décrites dans Wiley B., Sun Y., Mayers B., Xia Y., Chem. Eur. J. 2005, 11, 454. Par exemple, des nanoparticules d'argent de 170 nm environ de longueur d'arête sont formées par réduction du sel AgNO₃ par l'éthylène glycol en présence de polyvinylpyrrolidone à 160°C. Elles présentent l'inconvénient d'utiliser des composés organiques faiblement réducteurs qui doivent être activés à température élevée.

Parmi les méthodes de synthèse en solution dans un milieu organique, certaines d'entre elles permettent un contrôle de la croissance des nanoparticules métalliques en choisissant un précurseur du métal considéré possédant des ligands favorisant la réduction et la croissance contrôlée. Dans ces méthodes de synthèse, une décomposition de ces précurseurs organométalliques est mise en oeuvre comme cela est décrit dans « Chaudret et al., C.R. Chimie, 6, 2003, 1019-1034 ». A titre d'exemple, on peut citer l'emploi de ligands acides et amines à longue chaîne carbonée pour la synthèse de nanocubes de fer, comme cela est décrit dans Margeat O., Dumestre F., Amiens C., Chaudret B., Lecante P., Respaud P., Respaud M., Progress in solid state chemistry, 33 (2-4) 71, 2005..

Outre les méthodes de synthèse en solution dans un milieu organique, il existe également des méthodes de synthèse dans un milieu aqueux. Par milieu aqueux, on entend un milieu comprenant au moins une phase aqueuse majoritaire et éventuellement une phase organique. La présente invention relève plus particulièrement du domaine de ces méthodes de synthèse dans un milieu aqueux.

Il est connu d'utiliser des méthodes de synthèse en milieu aqueux avec tensio-actif pour la préparation de catalyseurs possédant des nanoparticules isotropes. Ainsi, l'article référencé « B. Veisz and Z. Kirali, Langmuir, 2003, 19, 4817-» décrit la synthèse de nanoparticules isotropes de palladium de forme cubooctaédrique. Le brevet américain US 4,714,693 décrit, quant à lui, une méthode de synthèse de nanoparticules supportées par formation puis dépôt et réduction de micelles en interaction avec le précurseur métallique.

Il est également connu de synthétiser des nanoparticules de morphologies contrôlées en milieu aqueux par adsorption sélective d'ions, molécules, polymères ou tensio-actifs sur certaines faces cristallines du métal. Un contrôle de la morphologie par addition d'ions halogénures a ainsi été observé par Filankembo et al. (J. Phys. Chem. B, 2003, 107, 7492). Ces méthodes de synthèse sont mises en oeuvre uniquement sur du cuivre, de l'argent ou de l'or.

Dans le domaine des méthodes de synthèse en milieu aqueux par adsorption sélective de polymères sur certaines faces cristallines du métal, le brevet américain US 6,090,858 décrit une méthode utilisée pour produire des nanoparticules colloïdales d'un métal de transition, présentant des formes particulières, à l'aide d'un agent de stabilisation, ladite méthode comprenant une mise en solution aqueuse d'un mélange d'un précurseur métallique et d'un agent de stabilisation suivie d'une réduction en présence d'un seul réducteur, l'hydrogène, ce qui ne permet pas un contrôle optimal de la forme. Cette méthode ne permet toutefois d'obtenir qu'une proportion de 60% de cubes de platine environ (Narayanan R., El-Sayed M.A., Nanoletters, 2004, 4(7), 1343).

Cette approche de croissance contrôlée peut être obtenue également en synthétisant dans un premier temps des nanoparticules isotropes, lesdites nanoparticules étant ensuite utilisées comme germes de croissance en présence d'un agent d'adsorption sélective et d'un réducteur approprié. Cette approche, dans laquelle deux composés réducteurs sont mis en oeuvre, a ainsi permis de synthétiser des nanoparticules cubiques d'or comme cela est décrit dans Sau T.K., Murphy C.J., J. Am. Chem. Soc., 2004, 126, 8648.

FR 2 874 515 ainsi décrit un procédé de préparation de nanoparticules.

### Résumé de l'invention

La présente invention a pour objet un procédé de préparation de nanoparticules métalliques cubiques comportant au moins les étapes suivantes :
a) la préparation d'au moins une solution aqueuse contenant au moins une source d'au moins un métal choisi parmi les métaux du groupe VIII de la classification périodique des éléments, au moins un composé réducteur R1 et au moins un stabilisant,
b) la préparation d'au moins une solution aqueuse contenant au moins une source d'au moins un métal choisi parmi les métaux du groupe VIII de la classification périodique des éléments et au moins un stabilisant à une température strictement supérieure à 70°C et inférieure ou égale à 80°C,
c) le mélange d'au moins une partie de la solution aqueuse obtenue à l'étape a) avec la solution aqueuse obtenue à l'étape b) de manière à obtenir, en présence d'au moins un réducteur R2, des nanoparticules métalliques sous forme cubique représentant au moins 70% en nombre de l'ensemble des nanoparticules métalliques formées,
d) le dépôt sur un support desdites nanoparticules métalliques issues de l'étape c).

Les nanoparticules métalliques supportées préparées selon le procédé de l'invention, dont au moins 70% en nombre se présentent sous une forme cubique, sont utilisées en tant que catalyseur pour l'hydrogénation sélective des hydrocarbures insaturés. Dans une telle application, il a été constaté de manière surprenante qu'un tel catalyseur est plus actif qu'un catalyseur supporté à base de nanoparticules métalliques dont celles de forme cubique représentent moins de 70% en nombre. Il a également été constaté que le catalyseur préparé selon le procédé de l'invention est plus sélectif vis-à-vis du(des) produit(s) monoinsaturé(s) en favorisant la formation du(des) produit(s) monoinsaturé(s) au détriment du produit saturé et qu'il est plus sélectif vis-à-vis d'un isomère monoinsaturé que vis-à-vis d'un autre isomère monoinsaturé.

### Description de l'invention

La présente invention a pour objet un procédé de préparation de nanoparticules métalliques cubiques comportant au moins les étapes suivantes :
a) la préparation d'au moins une solution aqueuse contenant au moins une source d'au moins un métal choisi parmi les métaux du groupe VIII de la classification périodique des éléments, au moins un composé réducteur R1 et au moins un stabilisant,
b) la préparation d'au moins une solution aqueuse contenant au moins une source d'au moins un métal choisi parmi les métaux du groupe VIII de la classification périodique des éléments et au moins un stabilisant à une température strictement supérieure à 70°C et inférieure ou égale à 80°C,
c) le mélange d'au moins une partie de la solution aqueuse obtenue à l'étape a) avec la solution aqueuse obtenue à l'étape b) de manière à obtenir, en présence d'au moins un réducteur R2, des nanoparticules métalliques sous forme cubique représentant au moins 70% en nombre de l'ensemble des nanoparticules métalliques formées,
d) le dépôt sur un support desdites nanoparticules métalliques issues de l'étape c).

Le procédé selon l'invention conduit à la production de nanoparticules métalliques dont au moins 70 % en nombre se trouvent sous forme cubique. Lesdites nanoparticules métalliques cubiques sont constituées d'au moins un métal choisi parmi les métaux du groupe VIII de la classification périodique des éléments. Lesdites nanoparticules métalliques cubiques préparées selon le procédé de l'invention se présentent sous la forme de cubes ou sous la forme de cubes tronqués selon la terminologie connue de l'Homme du métier. Lorsque les nanoparticules se présentent sous la forme de cubes, les arêtes adjacentes de chaque face du cube forment un angle égal à 90°. Lorsque les nanoparticules se présentent sous la forme de cubes tronqués, l'angle formé entre les arêtes adjacentes de chaque face du cube est différent de 90° car les coins formés par lesdites arêtes sont tronqués. Les nanoparticules métalliques cubiques préparées selon le procédé de l'invention présentent un facteur de forme compris entre 0,78 et 0,81. Lorsque le facteur de forme est égal à 0,78, les nanoparticules métalliques cubiques se présentent sous la forme de cubes. Lorsque le facteur de forme est égal à 0,81, les nanoparticules métalliques se présentent sous la forme de cubes tronqués d'arête a, chacune des troncatures des arêtes étant égale à a/4. Les nanoparticules métalliques cubiques d'arête a ayant un facteur de forme supérieur à 0,78 et inférieur à 0,81 se présentent sous la forme de cubes tronqués dont chacune des troncatures des arêtes est inférieure à a/4. Ledit facteur de forme est défini par la formule F= (4*Π*S)/P², S étant la surface de la particule mesurée dans le plan bidimensionnel de caractérisation en microscopie électronique à transmission, P étant le périmètre de la particule mesuré dans ce même plan. La surface de la particule correspond à la surface de la face de la nanoparticule cubique vue dans le plan de caractérisation en MET et le périmètre de la particule correspond au périmètre de la face de la nanoparticule cubique vue dans le plan de caractérisation en MET. Le facteur de forme, tel qu'il est défini ci-dessus, est avantageusement calculé à partir de mesures réalisées par microscopie électronique à transmission selon les méthodes décrites dans Coster, M, Chermant, J.L., Précis d'analyse d'images, Eds CNRS, 1985.

La proportion de nanoparticules métalliques cubiques présentant un facteur de forme F compris entre 0,78 et 0,81 est déterminée par analyse statistique en respectant les règles de comptage statistique connues de l'Homme du métier. Il s'agit en particulier de compter sur une population de nanoparticules d'au moins 200 nanoparticules, représentative de l'ensemble de l'échantillon analysé en MET, le nombre de nanoparticules cubiques. Le comptage statistique se fait généralement directement sur les clichés MET.

Les nanoparticules métalliques, dont au moins 70% en nombre sont formées de nanoparticules métalliques cubiques, préparées selon le procédé de l'invention sont constituées d'au moins un métal choisi parmi les métaux du groupe VIII de la classification périodique des éléments. Le(s) métal(ux) du groupe VIII est(sont) préférentiellement choisi(s) parmi le nickel, le cobalt, le fer, le ruthénium, le platine, le palladium et l'iridium, très préférentiellement choisi(s) parmi le cobalt, le nickel, le platine et le palladium et encore plus préférentiellement il s'agit du palladium. Lesdites nanoparticules métalliques, dont au moins 70% en nombre sont formées de nanoparticules métalliques cubiques, préparées selon le procédé de l'invention sont avantageusement constituées d'au moins deux métaux dont l'un au moins est choisi parmi les métaux du groupe VIII de la classification périodique des éléments, le second métal étant préférentiellement choisi parmi les métaux des groupes VIII et IB de la classification périodique des éléments, très préférentiellement choisi parmi les métaux du groupe IB et encore plus préférentiellement choisi parmi l'argent et l'or.

Chaque nanoparticule métallique cubique peut comporter un seul élément métallique choisi parmi les métaux du groupe VIII ou plusieurs éléments métalliques dont l'un au moins est choisi parmi les métaux du groupe VIII, par exemple il peut s'agir de nanoparticules bimétalliques cubiques, chacune d'elles étant constituée d'un métal du groupe VIII et d'un métal du groupe IB. De manière préférée, lesdites nanoparticules métalliques, et en particulier lesdites nanoparticules métalliques cubiques, obtenues par le procédé de l'invention sont monométalliques et constituées d'un métal du groupe VIII choisi dans la liste donnée ci-dessus et de préférence le palladium. Dans le cas de nanoparticules comportant plusieurs éléments métalliques, ces derniers peuvent être associés de n'importe quelle façon connue de l'homme du métier. Il peut s'agir d'un mélange quelconque, d'un alliage, une solution solide ou n'importe quelle structure comportant un coeur et une coquille. En particulier, lorsque lesdites nanoparticules sont bimétalliques et constituées de palladium et d'or ou de palladium et d'argent, c'est un alliage qui est formé.

La longueur des arêtes des faces des nanoparticules métalliques cubiques est comprise entre 2 et 200 nm, de manière très préférée comprise entre 5 et 100 nm et de manière encore plus préférée comprise entre 5 et 50 nm. Il est très avantageux que la longueur d'arêtes soit comprise entre 10 et 50 nm car il a été constaté de façon surprenante que des longueurs d'arêtes supérieures à 10 nm conduisaient, de façon inattendue, à de bonnes performances catalytiques.

Les nanoparticules métalliques, en particulier les nanoparticules métalliques cubiques, préparées selon le procédé de l'invention peuvent être isolées entre elles ou peuvent former des agglomérats. Elles peuvent également être associées les unes aux autres par des points de contact qui les relient.

Conformément au procédé de l'invention, au moins une source d'au moins un métal choisi parmi les métaux du groupe VIII de la classification périodique des éléments est introduite pour la mise en oeuvre de l'étape a) ainsi que pour la mise en oeuvre de l'étape b) dudit procédé de préparation. Le(s) métal(ux) du groupe VIII est(sont) préférentiellement choisi(s) parmi le nickel, le cobalt, le fer, le ruthénium, le platine, le palladium et l'iridium, très préférentiellement choisi(s) parmi le cobalt, le nickel, le platine et le palladium et encore plus préférentiellement il s'agit du palladium. Pour la préparation de nanoparticules monométalliques cubiques, le métal introduit pour la mise en oeuvre de l'étape a) est identique à celui introduit pour la mise en oeuvre de ladite étape b) et de préférence, il s'agit du palladium. Avantageusement, une seule source constituée d'un seul métal choisi parmi les métaux du groupe VIII est introduite pour la mise en oeuvre de l'étape a) puis pour la mise en oeuvre de l'étape b) pour l'obtention de nanoparticules monométalliques. De manière plus préférée, pour la préparation de nanoparticules monométalliques cubiques selon le procédé de l'invention, on introduit une source de palladium pour la mise en oeuvre de l'étape a) puis une source de palladium pour la mise en oeuvre de l'étape b). De manière préférée, pour la préparation de nanoparticules monométalliques cubiques selon le procédé de l'invention, la source de métal employée pour la mise en oeuvre de l'étape a) est identique à la source de métal employée pour la mise en oeuvre de l'étape b) du procédé de l'invention. Pour la préparation de nanoparticules bimétalliques cubiques et dans le cas particulier où les deux métaux sont des métaux du groupe VIII, il est essentiel qu'au moins une source d'au moins un des deux métaux soit introduite pour la mise en oeuvre de ladite étape a) et pour la mise en oeuvre de ladite étape b). Ainsi, la source du premier métal du groupe VIII peut être introduite pour la mise en oeuvre de l'étape a) et/ou l'étape b) et la source du second métal du groupe VIII peut être introduite pour la mise en oeuvre de l'étape a) et/ou l'étape b) dès lors qu'au moins l'une des deux sources est présente pour la mise en oeuvre de ladite étape a) et pour la mise en oeuvre de ladite étape b). Pour la préparation de nanoparticules bimétalliques cubiques et dans le cas particulier où l'un des métaux est un métal du groupe VIII et l'autre métal est un métal du groupe IB, préférentiellement choisi parmi l'or et l'argent, la source dudit métal du groupe IB peut être introduite pour la mise en oeuvre de l'étape a) et/ou de l'étape b).

Chacune des sources de métal employées pour la mise en oeuvre des étapes a) et b) du procédé selon l'invention peut être tout sel d'un précurseur dudit métal considéré présentant un degré d'oxydation dudit métal supérieur à 0 et soluble en solution aqueuse, au moins un métal étant choisi parmi les métaux du groupe VIII. Ce sel peut être un halogénure ou un hydroxyde du métal considéré ou alors un sel associant un halogénure et/ou un hydroxyde avec un alcalin, un groupement amine ou ammoniac. Ce sel peut être également un nitrate, nitrite ou sulfate du métal considéré seul ou en association avec une fonction amine ou ammoniac. Ledit sel de précurseur dudit métal peut aussi comporter un ligand organique, par exemple il peut s'agir de l'acétate de palladium.

Pour la préparation, selon le procédé de l'invention, de nanoparticules métalliques cubiques comprenant du palladium, on utilise avantageusement comme source de palladium, le chlorure de palladium, le bromure de palladium, l'iodure de palladium, l'hexachloropalladate de potassium, l'hexachloropalladate d'ammonium, le tétrabromopalladate de potassium, le tétrachloropalladate de potassium, le tétrachloropalladate d'ammonium, l'hexachloropalladate de sodium, le tétrachloropalladate de sodium, le nitrate de palladium, le nitrite de palladium, le nitrite de diaminepalladium, le sulfate de palladium, le nitrate de tétraaminepalladium, le dichlorodiamine palladium, l'acétate de palladium et l'acétylacétonate de palladium. De manière préférée, on utilise l'hexachloropalladate de potassium, le tétrachloropalladate de potassium, l'hexachloropalladate de sodium, le tétrachloropalladate de sodium et le nitrate de palladium.

Pour la préparation, selon le procédé de l'invention, de nanoparticules métalliques cubiques comprenant du platine, on utilise avantageusement comme source de platine, le chlorure de platine, l'hexachloroplatinate de potassium, l'hexachloroplatinate d'ammonium, le tétrabromoplatinate de potassium, le tétrachloroplatinate de potassium, le tétrachloroplatinate d'ammonium, l'hexachloroplatinate de sodium, le tétrachloroplatinate de sodium, le nitrate de platine, le nitrite de platine, le nitrite de diamineplatine, le sulfate de platine, le nitrate de tétraamineplatine, le dichlorodiamine platine, l'acétate de platine, l'acétylacétonate de platine, l'acide hexachloroplatinique, l'acide hexahydroxyplatinique, l'acide hexabromoplatinique, le chlorure de tétramineplatine, l'hexahydroxyplatinate de potassium et l'hexahydroxyplatinate de sodium. De manière préférée, on utilise l'hexachloroplatinate de potassium, le tétrachloroplatinate de potassium, l'hexachloroplatinate de sodium, le tétrachloroplatinate de sodium et le nitrate de platine.

Pour la préparation, selon le procédé de l'invention, de nanoparticules bimétalliques cubiques comprenant de l'argent, on utilise avantageusement comme source d'argent l'acétate d'argent, le chlorate d'argent, le perchlorate d'argent, le nitrate d'argent, le nitrite d'argent et le sulfate d'argent.

Pour la préparation, selon le procédé de l'invention, de nanoparticules bimétalliques cubiques comprenant de l'or, on utilise avantageusement comme source d'or, le chlorure d'or, le nitrate d'or, l'acide nitratoaurique, l'acide chloroaurique et l'acétate d'or.

La concentration molaire en métal(ux), de préférence en métal du groupe VIII, et de manière encore plus préférée en palladium, employée pour la mise en oeuvre de l'étape a) ainsi que pour la mise en oeuvre de l'étape b) du procédé de l'invention est comprise entre 1*10⁻⁵ et 1 mole/litre, de préférence entre 5*10⁻⁵ et 1*10⁻¹ mole/litre, et de manière plus préférée entre 1*10⁻⁴ et 1*10⁻² mole/litre. Ladite concentration molaire est celle du(es) métal(ux) présent(s) dans chacune des solutions aqueuses préparées à l'étape a), à l'étape b) et à l'étape c) du procédé de l'invention.

Conformément à l'invention, le procédé de préparation des nanoparticules métalliques cubiques met en oeuvre deux étapes de réduction successives, la première (étape a)) étant réalisée au moyen d'un composé réducteur R1 et la deuxième étant réalisée au moyen d'un composé réducteur R2 dont la composition chimique diffère de celle du composé R1. Selon l'invention, le composé R2 peut être introduit soit dans la solution aqueuse préparée au cours de la mise en oeuvre de ladite étape b) du procédé de l'invention soit dans la solution résultant du mélange de la solution aqueuse obtenue à l'étape a) avec la solution aqueuse obtenue à l'étape b). Le composé réducteur R2 est avantageusement introduit dans la solution aqueuse préparée au cours de la mise en oeuvre de ladite étape b) du procédé de l'invention. La présence du composé réducteur R2 dans l'une des étapes b) ou c) est essentielle pour la préparation des nanoparticules métalliques cubiques selon le procédé de l'invention, néanmoins le moment d'introduction dudit composé R2 est indifférent dès lors que le composé R2 n'est pas introduit simultanément avec le composé réducteur R1 dans une même solution de sorte que deux étapes de réduction soient réalisées successivement. Ainsi, l'introduction dudit composé R2 ne peut pas être réalisée au cours de la mise en oeuvre de l'étape a) du procédé de l'invention.

Les réducteurs R1 et R2 employés peuvent être de nature inorganique ou de nature organique. Les réducteurs inorganiques préférés sont choisis parmi l'hydrogène, l'hydrazine, les hydroxylamines, les hydrures et les borohydrures alcalins. Les réducteurs organiques préférés sont choisis parmi les acides carboxyliques, les alcools, les polyols, les aldéhydes, les cétones et leurs ions. De manière plus préférée, le composé réducteur R1 est choisi dans le groupe constitué par l'hydrogène, l'hydrazine, les hydroxylamines, les hydrures et les borohydrures alcalins, et de manière encore plus préférée R1 est le composé NaBH₄. De manière plus préférée, le composé réducteur R2 est choisi dans le groupe constitué par les acides carboxyliques, les alcools, les polyols, les aldéhydes, les cétones et leurs ions. Ainsi, il est avantageux que le composé réducteur R1 présente un pouvoir réducteur supérieur au réducteur R2. On utilise avantageusement le borohydrure de sodium comme composé réducteur R1. On utilise avantageusement un ion carboxylate comme composé réducteur R2. Il est préféré, dans le cas où le composé réducteur R2 employé présente une fonction protonée tel qu'un acide carboxylique ou un alcool, d'ajouter une base à la solution aqueuse contenant ledit composé R2 sous sa forme protonée. De manière plus préférée, ladite base est de la soude. L'ajout de la base, préférentiellement de la soude, permet d'obtenir l'anion correspondant par déprotonation du composé protoné R2, ledit anion présentant un pouvoir réducteur plus fort que la forme protonée. De préférence la base est introduite en quantité équimolaire par rapport au composé réducteur R2 sous sa forme protonée. De façon avantageuse, R2 est l'acide ascorbique ou sa forme déprotonée, l'ascorbate de sodium. La concentration molaire du réducteur R1 dans la solution aqueuse préparée à l'étape a) du procédé de l'invention est comprise entre 1*10⁻⁵ et 1 mole/litre, de préférence entre 5*10⁻⁵ et 1*10⁻¹ mole/litre, et de manière plus préférée entre 1*10⁻⁴ et 1*10⁻² mole/litre. De préférence, la concentration molaire dudit réducteur R1 dans la solution aqueuse préparée à ladite étape a) est proche de celle du métal du groupe VIII dans la solution aqueuse préparée à ladite étape a). Le rapport molaire R1/métal(ux)_{introduit dans l'étape a)} dans la solution aqueuse préparée à ladite étape a) est compris entre 1 et 30, de préférence entre 1 et 10, et de manière plus préférée entre 1 et 5. La concentration molaire du réducteur R2 dans la solution aqueuse préparée à l'étape b) ou c) du procédé de l'invention est comprise entre 1*10⁻⁵ et 1 mole/litre, de préférence entre 5*10⁻⁵ et 1*10⁻¹ mole/litre, et de manière plus préférée entre 1*10⁻⁴ et 1*10⁻² mole/litre. De préférence, la concentration molaire dudit réducteur R2 dans la solution aqueuse préparée à ladite étape b) ou étape c) est proche de celle du métal du groupe VIII dans la solution aqueuse préparée à ladite étape b) ou étape c). Le rapport molaire R2/métal(ux)_{introduit dans l'étape b)} dans la solution aqueuse préparée à l'étape b) ou c), selon l'étape au cours de laquelle est introduit le réducteur R2, est compris entre 1 et 10, de préférence entre 1 et 5.

Conformément au procédé selon l'invention, les étapes a) et b) sont réalisées en présence d'un stabilisant.

Le stabilisant employé pour la mise en oeuvre de l'étape a) et celui employé pour la mise en oeuvre de l'étape b) sont préférentiellement soit des tensio-actifs soit des agents complexants. Le stabilisant employé pour la mise en oeuvre de l'étape b) peut être de même nature et de même composition chimiques que celui employé pour la mise en oeuvre de ladite étape a) du procédé de l'invention ou peut être différent par sa nature et/ou sa composition chimique.

Il est préféré qu'au moins un stabilisant employé pour la mise en oeuvre du procédé de l'invention soit un tensio-actif. Ainsi, au moins un tensio-actif en tant que stabilisant est préférentiellement employé pour la mise en oeuvre de l'étape a) et/ou de l'étape b) du procédé de l'invention. Selon l'invention, les tensio-actifs employés comme stabilisants sont des composés organiques présentant au moins une fonction polaire hydrophile et au moins une chaîne hydrocarbonée hydrophobe. La solution aqueuse constituée du tensio-actif employé comme stabilisant pour la mise en oeuvre de l'étape a) présente préférentiellement une concentration molaire dudit tensio-actif bien supérieure à celle présentée par la solution constituée de la source de métal employée pour la mise en oeuvre de l'étape a).

Conformément à l'un des modes de réalisation de l'invention consistant à employer un tensio-actif en tant que stabilisant pour la mise en oeuvre de l'étape a) et/ou de l'étape b) du procédé de l'invention, ledit tensio-actif peut être de façon préférée tout composé de formule générale R(R1)(R2)(R3)X^{a}, Y^{b} dans laquelle :
- a et b prennent les valeurs de -2, -1, +1 ou +2 avec a+b=0,
- R est une chaîne hydrocarbonée comprenant entre 1 et 25 atomes de carbone, de préférence entre 8 et 18,
- R1, R2 et R3 sont tout groupement aliphatique, aromatique ou hétéroaromatique connu de l'homme du métier, R1, R2 et R3 pouvant être identiques ou différents, de préférence identiques et de manière très préférée R1, R2 et R3 sont des groupes méthyles,
- X est un élément choisi dans le groupe des alcalins et alcalino-terreux ou un groupement contenant de l'azote ou du soufre, de préférence X est un élément cationique de type ammonium quaternaire,
- Y est un élément anionique tel qu'un halogénure, nitrate, nitrite ou sulfate ou un élément cationique tel qu'un métal alcalin ou alcalino-terreux, de préférence Y est un élément anionique et très préférentiellement un halogénure.

De manière préférée, le tensio-actif utilisé pour la mise en oeuvre de l'étape a) et/ou l'étape b) est un sel halogéné d'ammonium quaternaire, en particulier un sel de formule H₃C(CH₂)ₙ(CH₃)₃N⁺, Br ou (CH₃(CH₂)ₙ)₄N⁺, Br⁻, n étant compris entre 1 et 15. De façon très préférée, ledit tensio-actif est le bromure de cétyltriméthylammonium (CTAB) de formule H₃C-(CH₂)₁₅(CH₃)₃N⁺,Br⁻. On utilise également avantageusement comme tensio-actif le dodecylsulfate de sodium (SDS) de formule H₃C(CH₂)₁₁OSO₃Na, le dodecanesulfonate de sodium de formule H₃C(CH₂)₁₁ₗSO₃Na, le dodecylbenzenesulfonate de sodium de formule H₃C(CH₂)₁₁C₆H₄SO₃Na.

Dans le cas où un tensio-actif est utilisé comme stabilisant pour la mise en oeuvre de l'étape a) et/ou l'étape b), il est possible d'utiliser, en outre, un co-tensio-actif différent du tensio-actif déjà utilisé mais néanmoins choisi parmi les composés présentant la même formule générale que celle décrite ci-dessus.

Conformément à un autre mode de réalisation de l'invention consistant à employer un agent complexant en tant que stabilisant pour la mise en oeuvre de l'étape a) et/ou de l'étape b) du procédé de l'invention, on utilise avantageusement :
- tout composé organique présentant une fonction carbonyle, par exemple tout composé comportant un groupement citrate, acétate, acétylacétonate, des polymères tel que le polyvinylpyrolidone ou le polyacrylate de sodium, des acides gras et/ou carboxyliques tels que l'acide oléïque et des hydroxyacides,
- tout composé organique présentant une fonction perchlorate,
- tout composé organique présentant une fonction amine, préférentiellement une amine aliphatique comme l'hexadécylamine,
- tout composé organique présentant une fonction phosphine, par exemple la triphénylphosphine ou l'oxyde de trioctylphosphine, ou une fonction phosphonate,
- tout composé organique présentant une fonction thiol, par exemple l'octanethiol ou le dodécanethiol,
- tout composé organique présentant une fonction thiophénol, diphosphite, alcools, ainsi que
- toute autre combinaison associant plusieurs des fonctions listées ci-dessus.

De préférence, les stabilisants employés pour la mise en oeuvre desdites étapes a) et b) présentent la même composition chimique, de préférence il s'agit d'un tensio-actif et de manière très préférée du bromure de cétyltriméthylammonium (CTAB) de formule H₃C-(CH₂)₁₅(CH₃)₃N⁺,Br⁻.

La concentration molaire du stabilisant dans la solution aqueuse préparée à l'étape a) du procédé de l'invention est comprise entre 0,01 et 0,75 mole/litre, de préférence entre 0,05 et 0,5 mole/litre. La concentration molaire du stabilisant dans la solution aqueuse préparée à l'étape b) du procédé de l'invention est comprise entre 0,05 et 1 mole/litre, de préférence entre 0,1 et 0,5 mole/litre.

La solution aqueuse constituée du stabilisant employée pour la mise en oeuvre de l'étape a) présente préférentiellement une concentration molaire dudit stabilisant bien supérieure à celle présentée par la solution constituée de la source de métal employée pour la mise en oeuvre de l'étape a).

Conformément à l'étape a) du procédé de l'invention, on prépare au moins une solution aqueuse contenant au moins une source d'au moins un métal choisi parmi les métaux du groupe VIII, au moins un composé réducteur R1 et au moins un stabilisant.

Le(s) métal(ux) du groupe VIII, le composé réducteur R1 et le stabilisant employés pour la mise en oeuvre de ladite étape a) sont choisis parmi les métaux, les composés réducteurs et les stabilisants présents dans les listes respectives décrites ci-dessus dans la présente description. De manière préférée, le métal employé dans ladite étape a) est le palladium. Le composé réducteur R1 préféré est le borohydrure de sodium NaBH₄. Le stabilisant préféré est le bromure de céthyltriméthylammonium (CTAB) de formule H₃C-(CH₂)₁₅(CH₃)₃N⁺,Br⁻.

La solution aqueuse obtenue à l'issue de ladite a) est préparée par mise en solution d'au moins une source d'au moins un métal du groupe VIII, d'au moins un stabilisant et d'au moins un réducteur R1 à une température comprise entre 20 et 40°C. Le composé réducteur R1 est préférentiellement ajouté sous agitation. Le stabilisant, de préférence le tensio-actif, employé pour la mise en oeuvre de ladite étape a), est maintenu à une température comprise entre 20°C et 40°C pendant la réalisation de l'étape de réduction au cours de ladite étape a) de manière à éviter la cristallisation dudit stabilisant. La durée de ladite étape a) est comprise entre 5 minutes et 24 heures.

Dans la solution aqueuse obtenue à l'issue de ladite étape a) du procédé de l'invention, lorsque le stabilisant est un tensio-actif, le rapport molaire tensio-actif/métal(ux) est compris entre 1 et 1000, préférentiellement compris entre 50 et 500 et de manière encore plus préférée entre 100 et 400. Lorsque le stabilisant est un agent complexant, le rapport molaire agent complexant/métal(ux) dans la solution aqueuse obtenue à l'issue de la mise en oeuvre de l'étape a) du procédé de l'invention est compris entre 1 et 1000, préférentiellement compris entre 100 et 500. Le rapport molaire R1/métal(ux)_{introduit dans l'étape a)} dans la solution aqueuse préparée à ladite étape a) est compris entre 1 et 30, de préférence entre 1 et 10, et de manière plus préférée entre 1 et 5.

Conformément à l'étape b) du procédé de l'invention, on prépare au moins une solution aqueuse contenant au moins une source d'au moins un métal choisi parmi les métaux du groupe VIII de la classification périodique des éléments et au moins un stabilisant à une température strictement supérieure à 70°C et inférieure ou égale à 80°C.

Le(s) métal(ux) du groupe VIII, le stabilisant et éventuellement le composé réducteur R2 employés pour la mise en oeuvre de ladite étape b) sont choisis parmi les métaux, les composés réducteurs et les stabilisants présents dans les listes respectives décrites ci-dessus dans la présente description. De manière préférée, le métal employé dans ladite étape b) est le palladium. Le composé réducteur R2 préféré est l'ascorbate de sodium. Le stabilisant préféré est le bromure de cétyltriméthylammonium (CTAB) de formule H₃C-(CH₂)₁₅(CH₃)₃N⁺,Br⁻.
Pour la préparation de nanoparticules monométalliques, le métal du groupe VIII employé pour la mise en oeuvre de ladite étape b) est identique à celui employé pour la mise en oeuvre de ladite étape a), de préférence il s'agit du palladium. De manière préférée, la source de métal employée pour la mise en oeuvre de l'étape b) est identique à la source de métal employée pour la mise en oeuvre de l'étape a) du procédé de l'invention. Pour la préparation de nanoparticules bimétalliques constituées d'un métal du groupe VIII et d'un métal du groupe IB, une source de métal du groupe IB peut être introduite au cours de ladite étape b), une telle source du métal IB ayant ou non été introduite au cours de l'étape a) du procédé de l'invention.

Le stabilisant employé pour la mise en oeuvre de ladite étape b) du procédé de l'invention est choisi parmi les tensio-actifs et les agents complexants cités plus haut dans la présente description. De manière préférée, il s'agit du CTAB.

Le composé réducteur R2 éventuellement employé pour la mise en oeuvre de ladite étape b) du procédé de l'invention est choisi parmi les composés cités plus haut dans la présente description. De manière préférée, il s'agit de l'ascorbate de sodium.

La solution aqueuse obtenue à l'issue de l'étape b) est préparée par mise en solution, à une température strictement supérieure à 70°C et inférieure ou égale à 80°C, d'au moins une source de métal du groupe VIII, d'au moins du stabilisant et éventuellement d'au moins du réducteur R2. Lorsque le réducteur R2 est introduit pour la mise en oeuvre de ladite étape b) du procédé de l'invention, celui-ci est introduit dans la solution après l'introduction de ladite source de métal du groupe VIII et dudit stabilisant, R2 étant préférentiellement introduit sous agitation. La durée de l'étape b) est comprise entre 1 min et 2 heures.

Dans la solution aqueuse obtenue à l'issue de ladite étape b) du procédé de l'invention, lorsque le stabilisant est un tensio-actif, le rapport molaire tensio-actif/métal(ux) est compris entre 5 et 500, préférentiellement compris entre 50 et 200 et de manière encore plus préférée entre 50 et 100. Lorsque le stabilisant est un agent complexant, le rapport molaire agent complexant/métal(ux) dans la solution aqueuse obtenue à l'issue de la mise en oeuvre de l'étape b) du procédé de l'invention est compris entre 1 et 500, préférentiellement compris entre 100 et 400. Le rapport molaire R2/métal(ux)_{introduit dans l'étape b)} dans la solution aqueuse préparée à l'étape b), dans le cas où le réducteur R2 est introduit pour la mise en oeuvre de l'étape b), est compris entre 1 et 10, de préférence entre 1 et 5.

Selon l'invention, il est essentiel que ladite étape b) du procédé de l'invention se réalise à une température strictement supérieure à 70°C et inférieure ou égale à 80°C.

Selon ladite étape c) du procédé de l'invention, au moins une partie de ladite solution aqueuse obtenue à l'issue de ladite étape a) est mélangée avec ladite solution aqueuse obtenue à l'issue de ladite étape b). Le mélange des deux solutions conformément à ladite étape c) est effectuée à la même température que celle à laquelle est réalisée l'étape b) du procédé de l'invention. La durée de l'étape c) est comprise entre 1 min et 72 heures. Plus précisément, pour la préparation de nanoparticules métalliques cubiques ayant un facteur de forme égal à 0,78, la durée de l'étape c) est comprise entre 1 min et 5 heures alors que cette durée est allongée et généralement comprise entre 10 heures et 72 heures lorsque des nanoparticules métalliques se présentant sous une forme de cubes tronqués sont produites.

Lorsque le composé réducteur R2 n'a pas été introduit dans la solution aqueuse préparée au cours de ladite étape b) du procédé de l'invention, ledit composé R2 est introduit pour la mise en oeuvre de ladite étape c) soit avant soit après le mélange des solutions issues des étapes a) et b) du procédé de l'invention.

De préférence, lors de l'étape c), on ajoute un sel de manière à contrôler l'interaction entre le stabilisant introduit à l'étape b) et les nanoparticules en formation. Ce sel peut être tout type de composé inorganique comprenant des anions halogénures tel que du chlorure, du bromure, du fluorure, ou encore des nitrates, des nitrites, ou des sulfates. De préférence, le sel inorganique ajouté à l'étape c) est choisi dans le groupe constitué par les halogénures d'alcalins et d'alcalino-terreux. La quantité de sel inorganique rajoutée est généralement comprise entre 10⁻⁴ et 0,5 mol/l, de préférence entre 5*10⁻⁴ et 0,1 mol/l, de manière plus préférée entre 1*10⁻³ et 0,05 mole/litre du volume total de la solution soumise à l'étape c).

La quantité de solution prélevée de la solution aqueuse obtenue à l'issue de ladite étape a) et mélangée à la solution aqueuse obtenue à l'issue de ladite étape b) conformément à l'étape c) est telle que la concentration en métal du groupe VIII, de préférence en palladium, réduit au degré d'oxydation 0, issu de la solution préparée à ladite étape a) et introduit dans ladite solution aqueuse obtenue à l'issue de ladite étape b), est comprise entre 15,0*10⁻⁹ mol/l et 16,0*10⁻⁶ mol/l, de préférence entre 31,0*10⁻⁸ mol/l et 6,5*10⁻⁷ mol/l.

Dans le mélange d'au moins une partie de la solution aqueuse obtenue à l'étape a) avec la solution aqueuse obtenue à l'étape b), la concentration en métal(ux), définie par rapport à la quantité de métal(ux) introduite pour la mise en oeuvre de ladite étape b), est comprise entre 1*10⁻⁵ et 1 mole/litre, de préférence entre 5*10⁻⁵ et 1*10⁻¹ mole/litre, et de manière plus préférée entre 1*10⁻⁴ et 1*10⁻² mole/litre, la concentration en stabilisant, définie par rapport à la quantité de stabilisant introduite à l'étape b), est comprise entre 0,05 et 1 mol/l, de préférence entre 0,1 et 0,5 mol/l, la concentration en réducteur R2 est comprise entre 1*10⁻⁵ et 1 mol/l et de préférence entre 5*10⁻⁵ et 1*10⁻¹ mol/l et de manière très préférée entre 1*10⁻⁴ et 1*10⁻² mol/l.

A l'issue de ladite étape c) du procédé de l'invention, des nanoparticules métalliques en suspension dans une solution aqueuse sont obtenues.
Parmi l'ensemble des nanoparticules métalliques formées, au moins 70 % en nombre, de préférence au moins 73% en nombre, présentent une morphologie sous forme de cube. Les nanoparticules métalliques cubiques obtenues conformément à la mise en oeuvre du procédé de préparation de l'invention présentent un facteur de forme compris entre 0,78 et 0,81. Les nanoparticules métalliques ne se présentant pas sous forme cubique présentent un facteur de forme qui n'est pas compris entre 0,78 et 0,81 et ne représentent pas plus que 30% en nombre de l'ensemble des nanoparticules métalliques formées. La proportion de nanoparticules métalliques cubiques est déterminée par un comptage statistique de l'ensemble des nanoparticules formées et visualisées par microscopie électronique à transmission comme cela est décrit plus haut dans la présente description.

Les nanoparticules métalliques dont au moins 70% en nombre se trouvent sous une forme cubique et obtenues à l'issue de ladite étape c) sont ensuite déposées sur un support conformément à ladite étape d) du procédé de l'invention.

Le support employé pour la mise en oeuvre de ladite étape d) est préférentiellement à base d'au moins un oxyde réfractaire choisi parmi les alumines, les silice, les silice-alumines, l'oxyde de magnésium, l'oxyde de zirconium, l'oxyde de thorium, l'oxyde de titane, pris seul ou en mélange entre eux. De préférence, ledit support est une alumine, une silice, ou une silice-alumine. Ledit support peut également être un charbon, un silico-aluminate, une argile ou tout autre composé connu pour être utilisé comme support tel que défini dans l'invention. Ledit support présente avantageusement une surface spécifique BET comprise entre 5 et 300 m²/g. Il peut être utilisé sous forme de poudre, ou être mis en forme sous la forme de billes, d'extrudés, de trilobes, de poudre ou de monolithe.

Le dépôt desdites nanoparticules métalliques, dont au moins 70% en nombre se présentent sous une forme cubique, à la surface du support est réalisé par n'importe quel moyen connu de l'homme du métier, et avantageusement par imprégnation à sec.
De manière préférée, les nanoparticules métalliques formées au cours de ladite étape c) sont concentrées dans le liquide dans lequel elles se trouvent en suspension partout moyen connu de l'homme du métier. Elles sont avantageusement concentrées par centrifugation réalisée à une vitesse comprise entre 1000 et 6000 trs/min pendant une durée comprise entre 15 minutes et 1 heure, par exemple, à 5000 tours/minute pendant 45 minutes. Puis le surnageant formé, essentiellement et préférentiellement entièrement dépourvu des nanoparticules, est retiré. La solution concentrée est ensuite imprégnée à sec sur un support : la solution est mise progressivement en contact, à température ambiante, avec le support par goutte à goutte sur celui-ci. Le mélange solution-support est homogénéisé par agitation. Le support imprégné desdites nanoparticules métalliques est ensuite séché à une température comprise entre 10 et 100 °C, de préférence entre 20 et 50°C pendant une durée comprise entre 6 et 24 heures, de préférence entre 10 et 15 heures.

Conformément à l'invention, le procédé met en oeuvre deux étapes de réduction distinctes. La première étape de réduction est réalisée lorsque la source d'au moins un métal choisi parmi les métaux du groupe VIII est mise en contact avec le réducteur R1 au cours de l'étape a) du procédé de l'invention. Par réduction de ladite source d'au moins un métal du groupe VIII à l'aide dudit réducteur R1, cette première étape conduit à la production de germes de nanoparticules ne présentant pas de morphologie bien déterminée et en particulier ne présentant pas une morphologie cubique. Cette première étape de réduction est avantageusement qualifiée étape de germination. Lesdits germes de nanoparticules se trouvent en suspension dans une solution aqueuse. Le stabilisant employé pour la mise en oeuvre de ladite étape a) permet de maintenir lesdits germes sous une forme bien dispersée en solution en évitant la formation d'agglomérats. La deuxième étape de réduction est réalisée au cours de ladite étape c) du procédé de l'invention lorsque lesdits germes de nanoparticules préparés au cours de l'étape a) sont mis en présence de la solution issue de l'étape b) du procédé de l'invention et du réducteur R2. Dans ladite deuxième étape de réduction, généralement qualifiée d'étape de croissance, on forme des nanoparticules, lesquelles ne sont pas supportées. Par réduction de la source d'au moins dudit métal introduite dans l'étape b) à l'aide dudit réducteur R2 et en présence des germes préparés à l'étape a), il se forme des nanoparticules métalliques de morphologie cubique par croissance desdits germes. Aussi, ladite deuxième étape de réduction est avantageusement qualifiée étape de croissance. Le stabilisant introduit dans ladite étape b) du procédé de l'invention agit comme agent de croissance sélectif en favorisant la croissance contrôlée de germes de nanoparticules sous forme cubique conformément à ladite étape c) du procédé de l'invention et dans les conditions de température données plus haut, à savoir une température strictement supérieure à 70°C et inférieure ou égale à 80°C.

Une étape de lavage e) est préférentiellement réalisée à la suite de ladite étape d) du procédé de l'invention. Ladite étape e) consiste à laver lesdites nanoparticules métalliques supportées. Elle est effectuée soit avant soit après l'étape de séchage du support imprégné. Ledit support imprégné par les nanoparticules est mis au contact d'un mélange eau/alcool, de préférence eau/éthanol. Après homogénéisation, les eaux de lavage sont filtrées. L'opération est avantageusement renouvelée deux fois.

La présente invention a également pour objet un catalyseur formé des nanoparticules métalliques cubiques supportées préparées conformément selon le procédé de l'invention.

Avantageusement, ledit catalyseur formé desdites nanoparticules supportées est soumis à un traitement d'activation sous atmosphère réductrice, à une température inférieure à 400°C, ou encore inférieure à 100°C, voire à 80°C ou 50°C.

Ledit catalyseur formé desdites nanoparticules supportées comprend avantageusement un ou plusieurs autres éléments dans sa composition, par exemple des éléments du groupe IIIA avantageusement choisi parmi le gallium et l'indium, des éléments du groupe IVA avantageusement choisi parmi le germanium et l'étain, des éléments du groupe IB, de préférence le cuivre, des éléments du groupe IA avantageusempent choisi parmi le lithium, le sodium et le potassium, des éléments du groupe IIA avantageusement choisi parmi le magnésium, le calcium, le strontium et le baryum et les halogènes. Lesdits éléments sont introduits sur le catalyseur par imprégnation du support comprenant les nanoparticules métalliques. L'imprégnation desdits éléments peut être réalisée avant ou après le traitement d'activation sous atmosphère réductrice décrit ci-dessus.

La teneur en élément du groupe IA et/ou du groupe IIA, lorsqu'il(s) est(sont) présent(s) dans la composition catalytique, est comprise entre 0,01 et 20 % en poids, de préférence entre 0,01 et 10 % en poids, de manière plus préférée entre 0,01 et 5 % en poids. La teneur en halogène, lorsqu'au moins un tel élément est présent dans la composition catalytique, est comprise entre 0,01 et 0,2 % en poids.

La teneur en métal(ux) du groupe VIII, avantageusement du palladium, présent(s) dans ledit catalyseur est de préférence comprise entre 0,01 et 20 % en poids, de préférence entre 0,01 et 10 % en poids et de manière encore plus préférée entre 0,01 et 1 % poids dudit catalyseur.
La teneur en métal du groupe IB lorsqu'un tel métal est présent dans la composition catalytique est comprise entre 0,01 et 20 % en poids, de préférence entre 0,01 et 10 % en poids et de manière encore plus préférée entre 0,01 et 1 % poids dudit catalyseur.

Plus précisément, le catalyseur comprenant lesdites nanoparticules métalliques dont au moins 70% en nombre se présentent sous une forme cubique est utilisé pour la transformation catalytique de molécules organiques et en particulier pour l'hydrogénation sélective d'hydrocarbures insaturés, par exemple des dioléfines ou des acétyléniques. L'hydrogénation sélective est généralement destinée à purifier les effluents d'un vapocraqueur ou d'un craquage catalytique en utilisant des catalyseurs à base de palladium comme cela est décrit dans « W.K. Lam, L. LLoyd, Oil & Gas Journal, p. 66-70, mars 1972 ». On pourra se référer aux conditions d'utilisation décrite dans la demande de brevet EP-A-0.899.012 pour l'hydrogénation sélective des dioléfines ou des acétyléniques.
Les conditions opératoires généralement utilisées pour la mise en oeuvre d'un procédé d'hydrogénation sélective utilisant le catalyseur à base des nanoparticules métalliques cubiques sont une température moyenne comprise entre 15 et 200 °C, une pression totale comprise entre 0,1 et 10 MPa et un rapport molaire hydrogène sur hydrocarbures compris entre 1 et 150.

### Exemples :

La méthode de production de nanoparticules selon l'invention est illustrée dans les exemples suivants. Les performances des catalyseurs comportant des nanoparticules obtenues directement par la méthode de l'invention sont comparées à celles des catalyseurs obtenus par des méthodes de l'art antérieur. Ces exemples présentent un caractère illustratif ne limitant pas la portée de l'invention.

La morphologie des nanoparticules des catalyseurs mis en oeuvre dans le cadre de ces exemples ont fait l'objet d'une caractérisation par Microscopie Electronique en Transmission. Le microscope électronique utilisé est le modèle Jeol 2010© commercialisé par la société JEOL. Ce modèle de microscope présente une tension d'accélération de 200 kV, une résolution spatiale de 0,2 nm et une limite de détection des particules métalliques supportées de l'ordre de 0,7 nm.

Le facteur de forme F est déterminé en utilisant le logiciel de traitement d'images IMAGIST© développé par « Image Processing and Analysis, Princeton Gamma Tech ». La proportion de nanoparticules métalliques cubiques est déterminée par comptage statistique réalisé directement sur les clichés MET : sur une population de nanoparticules comptant 200 nanoparticules, représentative de l'ensemble de l'échantillon analysé en MET, le nombre de nanoparticules cubiques est compté.

Avant de réaliser la caractérisation par microscopie électronique, les échantillons de catalyseur ont été préparés en suivant une procédure incluant une mise en solution dans l'éthanol, le dépôt d'une goutte de solution sur la grille d'analyse, le séchage et l'introduction de ladite grille dans le microscope.

### Exemple 1 : Synthèse de nanoparticules de palladium supportées présentant très majoritairement un facteur de forme F = 0,78 (Catalyseur A, conforme à l'invention)

Dans un premier temps, 12,5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes de nanoparticules ainsi préparée est laissée au repos 2 heures.
La concentration en K₂PdCl₄ dans la solution a) est de 3,08.10⁻⁴ M, la concentration en bromure de cetyltrimethylammonium est de 0,0925 M, la concentration en réducteur NaBH₄ est de 7,4.10⁻⁴ M, soit un rapport molaire bromure de cetyltrimethylammonium / K₂PdCl₄ de 300, un rapport molaire de NaBH₄/ K₂PdCl₄ de 2,4.

Dans un second temps, dans 100 mL d'une solution aqueuse de bromure de cétyltriméthylammonium de concentration 0,24 mol/L et thermostatée à 72°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 3 heures, toujours à 72°C.

La concentration en K₂PdCl₄ dans la solution b) est de 1.47.10⁻³ M, la concentration en bromure de cetyltrimethylammonium est de 0.1176 M, la concentration en réducteur ascorbate de sodium est de 1.568.10⁻³ M, soit un rapport molaire bromure de cetyltrimethylammonium / K₂PdCl₄ de 80, un rapport molaire ascorbate de sodium / K₂PdCl₄ de 1.067.

La concentration en K₂PdCl₄ (définie par rapport à la quantité de K₂PdCl₄ introduite lors de la préparation de la solution b)) dans la solution c) est de 1.467.10⁻³ M, la concentration en bromure de cetyltrimethylammonium (définie par rapport à la quantité de bromure de cetyltrimethylammonium introduite lors de la préparation de la solution b)) est de 0.1174 M, la concentration en réducteur ascorbate de sodium est de 1.568.10⁻³ M, soit un rapport molaire bromure de cetyltrimethylammonium / K₂PdCl₄ de 80.03, un rapport molaire ascorbate de sodium / K₂PdCl₄ de 1.069. La concentration en palladium réduit, au degré d'oxydation 0, issu de la solution a) et présent dans la solution c) est égale à 5,62*10⁻⁷ mol/l.

Les nanoparticules ainsi formées présentent 75 % de cubes (facteur de forme égal à 0,78), 10 % de bâtonnets (facteur de forme < à 0,7), 15 % de polyèdres. Les nanoparticules ainsi formées présentent très majoritairement un facteur de forme égal à 0,78. Les cubes ont une dimension de 30 nm mesurée sur l'arête.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

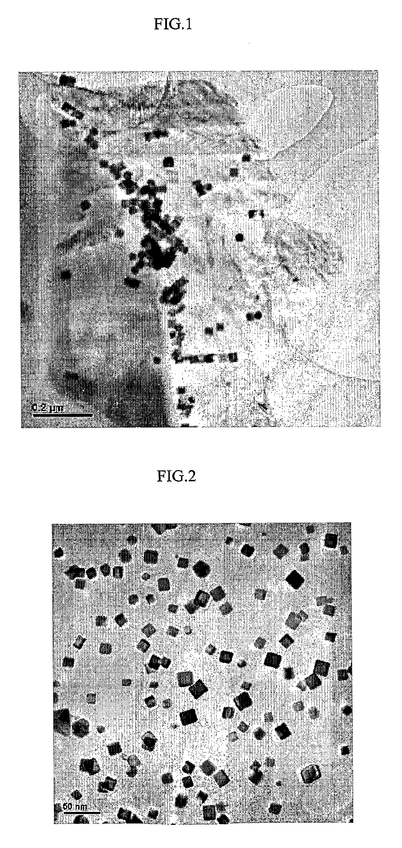

Le catalyseur est ensuite séché une nuit à 30°C. Le catalyseur A ainsi préparé contient 0,3% pds de palladium. Une photographie MET est donnée figure 1.

### Exemple 2 : Synthèse de nanoparticules de palladium supportées présentant très majoritairement un facteur de forme F = 0,78 (Catalyseur B, conforme à l'invention)

Dans un premier temps, 12,5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes nanoparticules ainsi préparée est laissée au repos 2 heures.

Les concentrations en K₂PdCl₄, bromure de cetyltrimethylammonium et NaBH₄ de la solution a) sont identiques à celles de l'exemple 1. Les rapports molaires bromure de cetyltrimethylammonium / K₂PdCl₄ , NaBH₄ / K₂PdCl₄ sont également identiques à ceux de l'exemple 1.

Dans un second temps, dans 100 mL d'une solution aqueuse de bromure de cétyltriméthylammonium de concentration 0,24 mol/L et thermostatée à 80°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 3 heures, toujours à 80°C.

Les concentrations en K₂PdCl₄, bromure de cetyltrimethylammonium et ascorbate de sodium de la solution b) sont identiques à celles de l'exemple 1. Les rapports molaires bromure de cetyltrimethylammonium / K₂PdCl₄, ascorbate de sodium / K₂PdCl₄ sont également identiques à ceux de l'exemple 1.

Les concentrations en K₂PdCl₄, bromure de cetyltrimethylammonium et ascorbate de sodium dans la solution c), exprimées par rapport aux quantités de K₂PdCl₄ et bromure de cetyltrimethymammonium introduites lors de la préparation de la solution b), sont identiques à celles de l'exemple 1. Les rapports molaires bromure de cetyltrimethylammonium / K₂PdCl₄ , ascorbate de sodium / K₂PdCl₄ sont également identiques à ceux de l'exemple 1. La concentration en palladium réduit, au degré d'oxydation 0, issu de la solution a) et présent dans la solution c) est égale à 5,62*10⁻⁷ mol/l.

Les nanoparticules ainsi formées présentent 74% de cubes (facteur de forme égal à 0,78), 7 % de bâtonnets (facteur de forme < à 0.7), 7 % de polyèdres, 12 % de tétraèdres. Une photographie MET est donnée à la figure 2.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

Le catalyseur est ensuite séché une nuit à 30°C. Le catalyseur B ainsi préparé contient 0,3% pds de palladium.

### Exemple 3 : Synthèse de nanoparticules de palladium supportées ne présentant pas majoritairement un facteur de forme F = 0.78 (Catalyseur C, non conforme à l'invention)

Dans un premier temps, 12,5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes nanoparticules ainsi préparée est laissée au repos 2 heures.

Les concentrations en K₂PdCl₄, bromure de cetyltrimethylammonium et NaBH₄ de la solution a) sont identiques à celles de l'exemple 1. Les rapports molaires bromure de cetyltrimethylammonium / K₂PdCl₄, NaBH₄ / K₂PdCl₄ sont également identiques à ceux de l'exemple 1.

Dans un second temps, dans 100 mL d'une solution aqueuse de bromure de cétyltriméthylammonium de concentration 0,24 mol/L et thermostatée à 50°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 3 heures, toujours à 50°C.

Les concentrations en K₂PdCl₄, bromure de cetyltrimethylammonium et ascorbate de sodium de la solution b) sont identiques à celles de l'exemple 1. Les rapports molaires bromure de cetyltrimethylammonium / K₂PdCl₄, ascorbate de sodium / K₂PdCl₄ sont également identiques à ceux de l'exemple 1.

Les concentrations en K₂PdCl₄, bromure de cetyltrimethylammonium et ascorbate de sodium de la solution c), exprimées par rapport aux quantités de K₂PdCl₄ et bromure de cetyltrimethymammonium introduites lors de la préparation de la solution b), sont identiques à celles de l'exemple 1. Les rapports molaires bromure de cetyltrimethylammonium / K₂PdCl₄ , ascorbate de sodium / K₂PdCl₄ sont également identiques à ceux de l'exemple 1. La concentration en palladium réduit, au degré d'oxydation 0, issu de la solution a) et présent dans la solution c) est égale à 5,62*10⁻⁷ mol/l.

Les nanoparticules ainsi formées présentent 58 % de cubes (facteur de forme égal à 0.78), 11 % de bâtonnets (facteur de forme < à 0.7), 10 % de polyèdres, 21 % de tétraèdres.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

Le catalyseur est ensuite séché une nuit à 30°C. Le catalyseur C ainsi préparé contient 0,3% pds de palladium.

### Exemple 4 : Synthèse de nanoparticules de palladium supportées présentant un facteur de forme F = 0.78 (Catalyseur D, non conforme à l'invention)

Dans un premier temps, 12,5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes nanoparticules ainsi préparée est laissée au repos 2 heures.

Les concentrations en K₂PdCl₄, bromure de cetyltrimethylammonium et NaBH₄ de la solution a) sont identiques à celles de l'exemple 1. Les rapports molaires bromure de cetyltrimethylammonium / K₂PdCl₄, NaBH₄ / K₂PdCl₄ sont également identiques à ceux de l'exemple 1.

Dans un second temps, dans 100 mL d'une solution aqueuse de bromure de cétyltriméthylammonium de concentration 0,24 mol/L et thermostatée à 60°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 3 heures, toujours à 60°C.

Les concentrations en K₂PdCl₄, bromure de cetyltrimethylammonium et ascorbate de sodium de la solution b) sont identiques à celles de l'exemple 1. Les rapports molaires bromure de cetyltrimethylammonium / K₂PdCl₄, ascorbate de sodium / K₂PdCl₄ sont également identiques à ceux de l'exemple 1.

Les concentrations en K₂PdCl₄, bromure de cetyltrimethylammonium et ascorbate de sodium de la solution c), exprimées par rapport aux quantités de K₂PdCl₄ et bromure de cetyltrimethymammonium introduites lors de la préparation de la solution b), sont identiques à celles de l'exemple 1. Les rapports molaires bromure de cetyltrimethylammonium / K₂PdCl₄, ascorbate de sodium / K₂PdCl₄ sont également identiques à ceux de l'exemple 1. La concentration en palladium réduit, au degré d'oxydation 0, issu de la solution a) et présent dans la solution c) est égale à 5,62*10⁻⁷ mol/l.

Les nanoparticules ainsi formées présentent 62 % de cubes (facteur de forme égal à 0,78), 11 % de bâtonnets (facteur de forme < à 0.7), 10 % de polyèdres, 17 % de tétraèdres.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

Le catalyseur est ensuite séché une nuit à 30°C. Le catalyseur D ainsi préparé contient 0,3% pds de palladium.

### Exemple 5 : Synthèse de nanoparticules de palladium supportées présentant un facteur de forme F = 0.78 (Catalyseur E, non conforme à l'invention)

Dans un premier temps, 12.5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes de nanoparticules ainsi préparée est laissée au repos 2 heures.

Les concentrations en K₂PdCl₄, bromure de cetyltrimethylammonium et NaBH₄ de la solution a) sont identiques à celles de l'exemple 1. Les rapports molaires bromure de cetyltrimethylammonium / K₂PdCl₄, NaBH₄ / K₂PdCl₄ sont également identiques à ceux de l'exemple 1.

Dans un second temps, dans 100 mL d'une solution aqueuse de bromure de cétyltriméthylammonium de concentration 0,24 mol/L et thermostatée à 90°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 3 heures, toujours à 90°C.

Les concentrations en K₂PdCl₄, bromure de cetyltrimethylammonium et ascorbate de sodium de la solution b) sont identiques à celles de l'exemple 1. Les rapports molaires bromure de cetyltrimethylammonium / K₂PdCl₄, ascorbate de sodium / K₂PdCl₄ sont également identiques à ceux de l'exemple 1.

Les concentrations en K₂PdCl₄, bromure de cetyltrimethylammonium et ascorbate de sodium de la solution c), exprimées par rapport aux quantités de K₂PdCl₄ et bromure de cetyltrimethymammonium introduites lors de la préparation de la solution b), sont identiques à celles de l'exemple 1. Les rapports molaires bromure de cetyltrimethylammonium / K₂PdCl₄, ascorbate de sodium / K₂PdCl₄ sont également identiques à ceux de l'exemple 1. La concentration en palladium réduit, au degré d'oxydation 0, issu de la solution a) et présent dans la solution c) est égale à 5,62*10⁻⁷ mol/l.

Les nanoparticules ainsi formées présentent 68 % de cubes (facteur de forme égal à 0.78), 14 % de bâtonnets (facteur de forme < à 0.7), 10 % de polyèdres, 8 % de tétraèdres.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

Le catalyseur est ensuite séché une nuit à 30°C. Le catalyseur E ainsi préparé contient 0,3% pds de palladium.

### Exemple 6 : Synthèse de nanoparticules de palladium supportées présentant très majoritairement une troncature de a/6 soit un facteur de forme F = 0,80 (Catalyseur F, conforme à l'invention)

Dans un premier temps, 12,5 mL d'une solution aqueuse de K₂PdCl₄.3H₂O de concentration 10⁻³ mol/L sont ajoutés à 25 mL d'une solution aqueuse de bromure de cétyltriméthylammonium de concentration 0,15 mol/L. Sous agitation, 3 mL d'une solution aqueuse de borohydrure de sodium de concentration 0,01 mol/L sont alors ajoutés. Après 10 minutes sous agitation à 30°C, la solution a) de germes de nanoparticules ainsi préparée est laissée au repos 2 heures.

La concentration en K₂PdCl₄ dans la solution a) est de 3.08.10⁻⁴ M, la concentration en bromure de cetyltrimethylammonium est de 0.0925 M, la concentration en réducteur NaBH₄ est de 7.4.10⁻⁴ M, soit un rapport molaire bromure de cetyltrimethylammonium / K₂PdCl₄ de 300, un rapport molaire de NaBH₄ / K₂PdCl₄ de 2.4.

Dans un second temps, dans 100 mL d'une solution aqueuse de bromure de cétyltriméthylammonium de concentration 0,24 mol/L et thermostatée à 72°C est ajoutée une solution aqueuse de 100 mL de K₂PdCl₄.3H₂O de concentration 3.10⁻³ mol/L. Après 5 min, 4 ml d'une solution d'ascorbate de sodium de concentration 0,08 mol/L sont ajoutés goutte à goutte. A cette solution dénommée b), 360 µL de solution a) sont alors ajoutés. La solution c) ainsi formée est laissée sous agitation 10 min, puis au repos 48 heures, toujours à 72°C.

La concentration en K₂PdCl₄ dans la solution b) est de 1.47.10⁻³ M, la concentration en bromure de cetyltrimethylammonium est de 0.1176 M, la concentration en réducteur ascorbate de sodium est de 1.568.10⁻³ M, soit un rapport molaire bromure de cetyltrimethylammonium / K₂PdCl₄ de 80, un rapport molaire ascorbate de sodium / K₂PdCl₄ de 1.067.

La concentration en K₂PdCl₄ (définie par rapport à la quantité de K₂PdCl₄ introduite lors de la préparation de la solution b)) dans la solution c) est de 1.467.10⁻³ M, la concentration en bromure de cetyltrimethylammonium (définie par rapport à la quantité de bromure de cetyltrimethylammonium introduite lors de la préparation de la solution b)) est de 0.1174 M, la concentration en réducteur ascorbate de sodium est de 1.568.10⁻³ M, soit un rapport molaire bromure de cetyltrimethylammonium / K₂PdCl₄ de 80.03, un rapport molaire ascorbate de sodium / K₂PdCl₄ de 1.069.

Les nanoparticules ainsi formées présentent 75 % de cubes présentant une troncature de a/6 (facteur de forme égal à 0,80), 11 % de bâtonnets (facteur de forme < à 0,7), 14 % de polyèdres.

Après réduction du volume de la solution c) par centrifugation, les nanoparticules de palladium sont déposées par imprégnation à sec sur une alumine.

Le catalyseur formé desdites nanoparticules supportées est ensuite lavé sur Buchner par 2 x 100 ml d'un mélange eau / éthanol (20% eau / 80 % éthanol).

Le catalyseur est ensuite séché une nuit à 30°C. Le catalyseur F ainsi préparé contient 0,3% pds de palladium.

### Exemple 7 : Test catalytique en hydrogénation du 1,3-butadiène

L'hydrogénation du 1,3-butadiène a été réalisée en phase liquide (n-heptane) dans un réacteur discontinu parfaitement agité de type « Grignard » sous une pression totale d'hydrogène et une température thermostatée de 20°C. Les produits de la réaction ont été analysés par chromatographie en phase gazeuse. Les activités catalytiques, exprimées en mole de H₂ par minute et par gramme de métal, ont été déterminées par le suivi de la chute de pression. Ces activités sont reportées au tableau 1. La sélectivité k(1,3-Butadiène)/k(1-butène) est exprimée par le rapport des vitesses de consommation de H₂ correspondant d'abord à l'hydrogénation du 1,3-butadiène en 1-butène, puis à la consommation de H₂ pour consommer le 1-butène lequel se transforme en particulier en butane. La sélectivité (1-butène) correspond à la proportion de 1-butène formé par rapport à l'ensemble des butènes

(1-butène, 2-butène), mesurée à 80% de conversion du 1,3-butadiène. Avant test, les catalyseurs ont préalablement été traités sous hydrogène à 50°C.

**Tableau 1: Activités et sélectivités mesurées en hydrogénation du 1,3-butadiène**

| | Activité mol/min/gmétal | Sélectivité k(1,3-Butadiène)/k(1-butène) | Sélectivité (1-butène) |
|---|---|---|---|
| Catalyseur A | 2.2 | 9 | 62% |
| Catalyseur B | 2.4 | 10 | 63% |
| Catalyseur C | 1.6 | 5 | 59 % |
| Catalyseur D | 1.8 | 5 | 60 % |
| Catalyseur E | 1.8 | 5 | 60 % |
| Catalyseur F | 2,2 | 8 | 62 % |

Les catalyseurs A, B et F dont les nanoparticules de Pd se présentent majoritairement sous forme de cubes ou cubes tronqués (proportion > 70% en nombre) possèdent une activité catalytique en hydrogénation du 1,3-butadiène (exprimée par gramme de palladium), une sélectivité k(1,3-butadiène)/k(1-butène), et une sélectivité en 1-butène supérieures à celles des catalyseurs C, D, E dont la proportion de nanoparticules de Pd se présentant sous la forme de cubes est inférieure à 70% en nombre. Ainsi, outre l'avantage que les catalyseurs A, B et F préparés selon le procédé de l'invention soient plus actifs que les catalyseurs C, D et E, ces trois catalyseurs A, B et F sont également plus sélectifs vis-à-vis de la monooléfine (le butène-1) que vis-à-vis du produit saturé (le butane) comme le prouve la sélectivité k(1,3-butadiène)/k(1-butène) qui est jusqu'à deux fois plus élevée pour les catalyseurs A, B et F, ils sont également plus sélectifs vis-à-vis de l'isomère 1-butène que vis-à-vis de l'isomère 2-butène comme le montre la sélectivité en 1-buène.

## Revendications

1. Procédé de préparation de nanoparticules métalliques cubiques comportant au moins les étapes suivantes :
a) la préparation d'au moins une solution aqueuse contenant au moins une source d'au moins un métal choisi parmi les métaux du groupe VIII de la classification périodique des éléments, au moins un composé réducteur R1 et au moins un stabilisant,
b) la préparation d'au moins une solution aqueuse contenant au moins une source d'au moins un métal choisi parmi les métaux du groupe VIII de la classification périodique des éléments et au moins un stabilisant à une température strictement supérieure à 70°C et inférieure ou égale à 80°C,
c) le mélange d'au moins une partie de la solution aqueuse obtenue à l'étape a) avec la solution aqueuse obtenue à l'étape b) de manière à obtenir, en présence d'au moins un réducteur R2, des nanoparticules métalliques sous forme cubique représentant au moins 70% en nombre de l'ensemble des nanoparticules métalliques formées, la longueur des arêtes des faces desdites nanoparticules métalliques sous forme cubique est comprise entre 2 et 200 nm ;
d) le dépôt sur un support desdites nanoparticules métalliques issues de l'étape c).

2. Procédé selon la revendication 1 tel qu'il comporte au moins une étape e) à la suite de ladite étape d) consistant à laver lesdites nanoparticules supportées.

3. Procédé selon l'une des revendications 1 ou 2 tel le(s) métal(ux) du groupe VIII employé(s) pour la mise en oeuvre desdites étapes a) et b) est(sont) choisi(s) parmi le cobalt, le nickel, le platine et le palladium.

4. Procédé selon l'une des revendications 1 à 3 tel qu'on prépare des nanoparticules monométalliques cubiques constituées de palladium.

5. Procédé selon l'une des revendications 1 à 3 tel qu'on prépare des nanoparticules bimétalliques cubiques en introduisant une source d'un métal du groupe IB pour la mise en oeuvre de l'étape a) et/ou de l'étape b).

6. Procédé selon l'une des revendications 1 à 5 tel que le composé réducteur R2 est introduit soit dans la solution aqueuse préparée au cours de la mise en oeuvre de ladite étape b) soit dans la solution résultant du mélange de la solution aqueuse obtenue à l'étape a) avec la solution aqueuse obtenue à l'étape b).

7. Procédé selon l'une des revendications 1 à 6 tel que le composé réducteur R1 est choisi dans le groupe constitué par l'hydrogène, l'hydrazine, les hydroxylamines, les hydrures et les borohydrures alcalins.

8. Procédé selon la revendication 7 tel que le composé réducteur R1 est le composé NaBH₄.

9. Procédé selon l'une des revendications 1 à 8 tel que le composé réducteur R2 est choisi dans le groupe constitué par les acides carboxyliques, les alcools, les polyols, les aldéhydes, les cétones et leurs ions.

10. Procédé selon la revendication 9 tel que le composé réducteur R2 est l'ascorbate de sodium.

11. Procédé selon l'une des revendications 1 à 10 tel que le stabilisant employé pour la mise en oeuvre de l'étape a) et celui employé pour la mise en oeuvre de l'étape b) sont soit des tensio-actifs soit des agents complexants.

12. Procédé selon l'une des revendications 1 à 11 tel qu'au moins un tensio-actif en tant que stabilisant est employé pour la mise en oeuvre de l'étape a) et/ou de l'étape b).

13. Procédé selon l'une des revendications 1 à 12 tel que le tensio-actif employé pour la mise en oeuvre de l'étape a) et/ou de l'étape b) est un sel halogéné d'ammonium quaternaire.

14. Procédé selon l'une des revendications 1 à 13 tel que le tensio-actif employé pour la mise en oeuvre de l'étape a) et de l'étape b) est le bromure de céthyltriméthyammonium.

15. Procédé selon l'une des revendications 1 à 14 tel que dans la solution aqueuse obtenue à l'issue de ladite étape a), le rapport molaire tensio-actif/métal(ux) est compris entre 1 et 1000 et le rapport molaire R1/métal(ux)_{introduit dans l'étape a)} est compris entre 1 et 30.

16. Procédé selon l'une des revendications 1 à 15 tel que dans la solution aqueuse obtenue à l'issue de ladite étape b), le rapport molaire tensio-actif/métal(ux) est compris entre 5 et 500.

17. Procédé selon l'une des revendications 1 à 16 tel que ladite étape c) est réalisée à la même température que celle à laquelle est réalisée ladite étape b).

18. Procédé selon l'une des revendications 1 à 17 tel que dans le mélange selon l'étape c), la concentration en métal(ux), définie par rapport à la quantité de métal(ux) introduite pour la mise en oeuvre de ladite étape b), est comprise entre 1*10⁻⁵ et 1 mole/litre, la concentration en stabilisant, définie par rapport à la quantité de stabilisant introduite à l'étape b), est comprise entre 0,05 et 1 mol/l, la concentration en réducteur R2 est comprise entre 1*10⁻⁵ et 1 mol/l.

19. Procédé selon l'une des revendications 1 à 18 tel que le support employé pour la mise en oeuvre de ladite étape d) est une alumine, une silice ou une silice-alumine.

## Patentansprüche

1. Verfahren zur Herstellung von metallischen kubischen Nanopartikeln umfassend wenigstens die folgenden Schritte:
a) die Herstellung wenigstens einer wässrigen Lösung enthaltend wenigstens eine Quelle wenigstens eines Metalls ausgewählt aus der Gruppe VIII des Periodensystems der Elemente, wenigstens eine reduzierende Verbindung R1 und wenigstens einen Stabilisator,
b) die Herstellung wenigstens einer wässrigen Lösung enthaltend wenigstens eine Quelle wenigstens eines Metalls ausgewählt aus der Gruppe VIII des Periodensystems der Elemente und wenigstens einen Stabilisator bei einer Temperatur von strikt oberhalb von 70°C und kleiner gleich 80°C,
c) dem Mischen von wenigstens eines Teils der in Schritt a) erhaltenen wässrigen Lösung mit der in Schritt b) erhaltenen Lösung, um in Gegenwart wenigstens einer reduzierenden Verbindung R2 metallische Nanopartikel in kubischer Form zu erhalten, die zahlenmäßig wenigstens 70% der gebildeten metallischen Nanopartikel repräsentieren, wobei die Kantenlänge der Seiten der metallischen Nanopartikel in kubischer Form zwischen 2 und 200 nm beträgt;
d) das Abscheiden der aus Schritt c) erhaltenen metallischen Nanopartikel auf einem Träger;

2. Verfahren gemäß Anspruch 1, welches mindestens einen, dem Schritt d) folgenden, Schritt e) umfasst, bestehend aus dem Waschen der geträgerten Nanopartikel.

3. Verfahren gemäß Anspruch 1 oder 2, bei dem das (die) verwendete(n) Metall(e) der Gruppe VIII zur Umsetzung der Schritte a) und b) gewählt ist (sind) aus Kobalt, Nickel Platin und Palladium.

4. Verfahren gemäß einem der Ansprüche 1 bis 3, bei dem monometallische kubische Nanopartikel aus Palladium hergestellt werden.

5. Verfahren gemäß einem der Ansprüche 1 bis 3, bei dem bimetallische kubische Nanopartikel hergestellt werden durch Einführen einer Quelle eines Metalls der Gruppe IB, um die Schritte a) und/oder b) durchzuführen.

6. Verfahren gemäß einem der Ansprüche 1 bis 5, bei dem die reduzierende Verbindung R2 eingeführt wird entweder in der hergestellten wässrigen Lösung im Verlauf der Durchführung des Schrittes b) oder in der resultierenden Lösung aus der Mischung der in Schritt a) erhaltenen wässrigen Lösung mit der in Schritt b) erhaltenen wässrigen Lösung.

7. Verfahren gemäß einem der Ansprüche 1 bis 6, bei dem die reduzierende Verbindung R1 gewählt ist aus der Gruppe gebildet durch Wasserstoff, Hydrazin, den Hydroxylaminen, den alkalischen Hydriden und Borhydriden.

8. Verfahren nach Anspruch 7, bei dem die reduzierende Verbindung R1 NaBH₄ ist.

9. Verfahren gemäß einem der Ansprüche 1 bis 8, bei dem die reduzierende Verbindung R2 ausgewählt ist aus der Gruppe gebildet durch die Carboxylsäuren, den Alkoholen, den Polyolen, den Aldehyden, den Ketonen und ihren Ionen.

10. Verfahren nach Anspruch 9, bei dem die reduzierende Verbindung R2 Natriumascorbat ist.

11. Verfahren nach einem der Ansprüche 1 bis 10, bei dem der für die Umsetzung des Schrittes a) gewählte Stabilisator und der für die Umsetzung des Schrittes b) gewählte entweder Tenside oder Komplexbildner sind.

12. Verfahren nach einem der Ansprüche 1 bis 11, bei dem wenigstens ein Tensid in seiner Eigenschaft als Stabilisator bei der Umsetzung des Schrittes a) und/oder des Schrittes b) eingesetzt wird.

13. Verfahren nach einem der Ansprüche 1 bis 12, bei dem das zur Umsetzung des Schrittes a) und/oder des Schrittes b) eingesetzte Tensid ein quaternäres Ammoniumhalogenidsalz ist.

14. Verfahren nach einem der Ansprüche 1 bis 13, bei dem das zur Umsetzung des Schrittes a) und des Schrittes b) eingesetzte Tensid das Cethyltrimethylammoniumbromid ist.

15. Verfahren nach einem der Ansprüche 1 bis 14, bei dem das molare Verhältnis von Tensid/Metall(en) in der wässrigen Lösung erhalten am Ausgang von Schritt a) zwischen 1 und 1000 beträgt, und das molare Verhältnis von R1/Metall(en)_{eingeführt in Schritt a)} zwischen 1 und 30 beträgt.

16. Verfahren nach einem der Ansprüche 1 bis 15, bei dem das molare Verhältnis von Tensid/Metall(en) in der wässrigen Lösung erhalten am Ausgang von Schritt b) zwischen 5 und 500 beträgt.

17. Verfahren nach einem der Ansprüche 1 bis 16, bei dem der Schritt c) bei derselben Temperatur durchgeführt wird, wie die, bei der der Schritt b) durchgeführt wird.

18. Verfahren nach einem der Ansprüche 1 bis 17, bei dem in der Mischung gemäß Schritt c) die Metallkonzentration, definiert als Verhältnis zur Menge von zur Durchführung des Schrittes b) eingeführten Metall(en), zwischen 1*10⁻⁵ und 1 Mol/Liter beträgt, die Stabilisatorkonzentration, definiert als Verhältnis zur Menge des in Schritt b) eingeführten Stabilisators zwischen 0,05 und 1 mol/l beträgt, die Konzentration der reduzierenden Verbindung R2 zwischen 1*10⁻⁵ und 1 mol/l beträgt.

19. Verfahren nach einem der Ansprüche 1 bis 18, bei dem der zur Durchführung von Schritt d) verwendete Träger ein Aluminiumoxid, ein Siliziumoxid oder ein Silizium-Aluminiumoxid ist.

## Claims

1. A process for preparing cubic metallic nanoparticles, comprising at least the following steps:
a) preparing at least one aqueous solution containing at least one source of at least one metal selected from metals from group VIII of the periodic table of the elements, at least one reducing agent R1 and at least one stabilizer;
b) preparing at least one aqueous solution containing at least one source of at least one metal selected from metals from group VIII of the periodic table of the elements and at least one stabilizer at a temperature strictly higher than 70°C and less than or equal to 80°C;
c) mixing at least a portion of the aqueous solution obtained in step a) with the aqueous solution obtained in step b) to obtain, in the presence of at least one reducing agent R2, metallic nanoparticles in the cubic form representing at least 70% by number of the entire quantity of metallic nanoparticles which are formed, the length of the edges of the faces of said cubic metallic nanoparticles is in the range 2 to 200 nm;
d) depositing said metallic nanoparticles derived from step c) on a support.

2. A process according to claim 1, which comprises at least one step e) following said step d), consisting of washing said supported nanoparticles.

3. A process according to one of claims 1 or 2, in which the group VIII metal(s) employed to carry out said steps a) and b) is (are) selected from cobalt, nickel, platinum and palladium.

4. A process according to one of claims 1 to 3, in which the cubic monometallic nanoparticles prepared are constituted by palladium.

5. A process according to one of claims 1 to 3, in which cubic bimetallic nanoparticles are prepared by introducing a source of a group IB metal to carry out step a) and/or step b).

6. A process according to one of claims 1 to 5, in which the reducing agent R2 is introduced either into the aqueous solution prepared during the course of said step b) or into the solution resulting from mixing the aqueous solution obtained in step a) with the aqueous solution obtained in step b).

7. A process according to one of claims 1 to 6, in which the reducing agent R1 is selected from the group constituted by hydrogen, hydrazine, hydroxylamines, hydrides and the alkali borohydrides.

8. A process according to claim 7, in which the reducing agent R1 is the compound NaBH₄.

9. A process according to one of claims 1 to 8, in which the reducing agent R2 is selected from the group constituted by carboxylic acids, alcohols, polyols, aldehydes, ketones and their ions.

10. A process according to claim 9, in which the reducing agent R2 is sodium ascorbate.

11. A process according to one of claims 1 to 10, in which the stabilizer employed to carry out step a) and that employed to carry out step b) are either surfactants or complexing agents.

12. A process according to one of claims 1 to 11, in which at least one surfactant used as a stabilizer is employed to carry out step a) and/or step b).

13. A process according to one of claims 1 to 12, in which the surfactant employed to carry out step a) and/or step b) is a halogenated quaternary ammonium salt.

14. A process according to one of claims 1 to 13, in which the surfactant employed to carry out step a) and step b) is cetyltrimethylammonium bromide.

15. A process according to one of claims 1 to 14, in which in the aqueous solution obtained at the end of said step a), the surfactant/metal(s) molar ratio is in the range 1 to 1000 and the R1/metal(s)_{introduced in step a)} molar ratio is in the range 1 to 30.

16. A process according to one of claims 1 to 15 in which, in the aqueous solution obtained at the end of said step b), the surfactant/metal(s) molar ratio is in the range 5 to 500.

17. A process according to one of claims 1 to 16, in which said step c) is carried out at the same temperature as that at which said step b) is carried out.

18. A process according to one of claims 1 to 17 in which, in the mixture of step c), the concentration of metal(s), defined with respect to the quantity of metal(s) introduced to carry out said step b), is in the range 1 x 10⁻⁵ to 1 mole/litre, the concentration of stabilizer, defined as the ratio of the quantity of stabilizer introduced in step b), is in the range 0.05 to 1 mole/litre, and the concentration of reducing agent R2 is in the range 1 x 10⁻⁵ to 1 mole/litre.

19. A process according to one of claims 1 to 18, in which the support employed to carry out said step d) is an alumina, a silica or a silica-alumina.
